# FASCICULE DE BREVET EUROPEEN

(11) **EP 2 574 258 B1**
(45) Date de publication et mention de la délivrance du brevet: **25.06.2014**
(21) Numéro de dépôt: 12185975.5
(22) Date de dépôt: 25.09.2012
(51) Int. Cl.: A47J 27/00, A47J 43/046

(54) **Appareil électroménager chauffant, prevu notamment pour la préparation de sauces**
Elektrohaushaltsgerät mit Aufheizfunktion, insbesondere für die Herstellung von Saucen
Heating household apparatus, in particular for preparing sauces

(30) Priorité: 28.09.2011 FR 1158713
(43) Date de publication de la demande: 03.04.2013
(73) Titulaire: SEB S.A., 69130 Ecully (FR)
(72) Inventeur: Dirand, Pascal, 21160 Marsannay-la-Côte (FR); Dumoux, Philippe, 21120 Gemeaux (FR)
(74) Mandataire: Cémeli, Eric Philippe Laurent

(56) Documents cités:
- EP-A1- 0 556 467
- US-A1- 2008 198 688
- US-B1- 6 289 793

## Description

La présente invention concerne le domaine technique des appareils électroménagers prévus pour chauffer les aliments.

La présente invention concerne notamment, mais non exclusivement, des appareils électroménagers prévus pour chauffer les aliments en les mélangeant.

La présente invention concerne plus particulièrement les appareils électroménagers prévus pour la réalisation de sauces pour lesquels une régulation précise de température est souhaitée.

Il est connu du document EP 0 350 380 un appareil électroménager de préparation culinaire chauffant comportant une pale entrainée en rotation dans une cuve métallique disposée sur un socle chauffant. Cette disposition permet de retirer aisément la cuve de l'appareil. Le socle chauffant comporte une semelle en aluminum sur laquelle repose la cuve métallique. Une résistance électrique de chauffage est disposée sous la semelle en aluminium. Toutefois ce document reste muet sur le contrôle de la puissance de la résistance électrique chauffante.

Il est connu du document EP 0 556 467 un appareil électroménager du type précité dans lequel le socle chauffant est associé à deux dispositifs de régulation de température. Un premier dispositif de régulation de température comporte un capteur de température monté mobile contre un moyen de rappel élastique dans une ouverture traversant le socle chauffant, pour venir en contact contre le fond de la cuve de l'appareil. Un second dispositif de régulation de température est disposé sous le socle chauffant de manière à obtenir un bon contact thermique avec le socle chauffant. Ainsi le premier dispositif de régulation de température contrôle la température de la cuve de l'appareil alors que le second dispositif de régulation de température contrôle plus particulièrement la température du socle chauffant. Un inconvénient de la réalisation proposée dans ce document avec une cuve comportant un corps réalisé en acier inoxydable réside dans le contact direct du capteur de température avec le corps de cuve ainsi que dans la disposition dudit capteur de température à proximité de l'élément chauffant du socle chauffant. Ces dispositions rendent difficiles l'obtention de températures de préparation homogènes, précises et présentant de faibles variations dues à l'alternance entre les périodes de chauffe et les périodes d'arrêt de la chauffe.

Un but de la présente invention est de proposer un appareil électroménager de préparation culinaire chauffant permettant de piloter précisément la chauffe d'une cuve disposée sur une semelle chauffante, notamment pour la réalisation de sauces à une température inférieure à 100°C.

Un autre but de la présente invention est de proposer un appareil électroménager de préparation culinaire chauffant favorisant l'obtention d'une température homogène dans une préparation au moins en partie liquide.

Ces buts sont atteints avec un appareil électroménager de préparation culinaire chauffant comportant un siège chauffant recevant une cuve métallique amovible, un premier dispositif de régulation thermique comportant un capteur de température monté mobile contre un moyen de rappel élastique dans une ouverture traversant le siège chauffant, ledit capteur de température venant en contact avec la cuve, un deuxième dispositif de régulation thermique monté en bon contact thermique avec le siège chauffant, du fait que la cuve comporte un fond diffuseur inférieur reposant sur le siège chauffant, que le capteur de température est agencé dans une zone froide du siège chauffant, et que le capteur de température vient en contact avec le fond diffuseur inférieur de la cuve. Le fond diffuseur inférieur permet de mieux répartir les calories issues du siège chauffant. La température de la préparation contenue dans la cuve peut être plus homogène. L'agencement du capteur de température dans une zone froide du siège chauffant permet de limiter l'influence des moyens de chauffe sur le capteur de température. Ainsi la température lue par le capteur présente moins de variations et peut mieux refléter la température de la préparation contenue dans la cuve.

Avantageusement, la cuve comporte un corps réalisé en acier inoxydable, sous lequel est fixé le fond diffuseur inférieur. Le corps de la cuve réalisé en acier inoxydable conduit moins bien la chaleur que l'aluminium et permet de limiter les déperditions thermiques.

Avantageusement encore, la paroi latérale de la cuve présente un renflement annulaire. Cette disposition permet de favoriser la rétention de la chaleur et des arômes de la sauce. Cette disposition favorise aussi la réalisation d'un appareil chauffant comprenant une cuve dépourvue de couvercle, ce qui facilite l'observation de la préparation en cours de réalisation.

Avantageusement encore, le siège chauffant est constitué par une platine en aluminium associée à des moyens de chauffe. Une telle disposition est économique et procure de bons résultats.

Avantageusement alors, la platine en aluminium est surmoulée sur un élément chauffant blindé. Une telle disposition est économique et procure de bons résultats.

Avantageusement alors, l'ouverture est agencée à proximité des extrémités de l'élément chauffant blindé. Cette disposition permet d'obtenir une zone froide de taille réduite limitant les écarts de température du siège chauffant tout en limitant l'influence directe des moyens de chauffe sur le capteur de température.

Avantageusement encore, l'élément chauffant blindé forme un anneau ouvert. Une telle disposition est bien adaptée à la réalisation d'un appareil comportant un dispositif d'entrainement traversant le siège chauffant.

Avantageusement encore, l'ouverture est agencée entre les extrémités de l'élément chauffant blindé et le centre du siège chauffant. Une telle disposition permet de mieux limiter les écarts de température détectés par le capteur de température qu'une implantation en périphérie de l'élément chauffant blindé.

Selon une forme de réalisation préférée, la cuve repose sur une base motorisée prévue pour entrainer en rotation une pale agencée dans la cuve. Cette disposition permet d'améliorer l'homogénéisation de la température de la préparation contenue dans la cuve, et favorise l'obtention de températures plus précises.

Alors, selon une forme de réalisation avantageuse, un axe d'entrainement traverse le siège chauffant et le fond diffuseur inférieur présente une forme annulaire ménageant un passage central. Cette disposition permet de favoriser le retrait de la cuve en laissant libre l'ouverture supérieure de la cuve, le passage central du fond diffuseur inférieur permettant l'entrainement de la pale.

Pour éviter la présence d'une cheminée dans le fond de la cuve, la cuve porte un axe entraîneur présentant un organe d'entraînement inférieur prévu pour être entrainé en rotation par la base motorisée et un organe d'entrainement supérieur prévu pour entrainer en rotation la pale. Cette disposition permet de retirer ensemble la cuve et la pale de la base motorisée, la cuve présentant un fond étanche.

Avantageusement encore, le fond diffuseur inférieur est réalisé en aluminium. Une telle disposition est économique et procure de bons résultats.

Avantageusement encore, le fond diffuseur inférieur présente au moins une conformation concave prévue pour loger une protubérance formée sur le siège chauffant. Cette disposition permet de favoriser le centrage et la retenue de la cuve sur le siège chauffant.

Avantageusement alors, la conformation concave est positionnée en bordure latérale du fond diffuseur inférieur. Cette disposition permet de favoriser une répartition homogène de température dans le fond diffuseur inférieur. Cette disposition permet également de favoriser un bon accrochage entre le corps de la cuve et le fond diffuseur inférieur.

L'invention sera mieux comprise à l'étude d'un exemple de réalisation, pris à titre nullement limitatif, illustré dans les figures annexées, dans lesquelles :
- la figure 1 est une vue en perspective d'un appareil de préparation culinaire chauffant selon l'invention,
- la figure 2 est une vue en perspective de la base de l'appareil illustré sur la figure 1, portant une cuve et une pale représentée en coupe verticale,
- la figure 3 est une vue partielle en coupe de la base de l'appareil illustrée sur les figures 1 et 2, montrant le siège chauffant ainsi que le dispositif d'entrainement,
- la figure 4 est une vue de dessus en perspective du siège chauffant de la base de l'appareil illustrée sur les figures 1 à 3,
- la figure 5 est une vue en coupe de la partie inférieure de la cuve illustrée sur les figures 1 et 2,
- la figure 6 est une vue en perspective de l'organe d'entraînement supérieur agencé à l'intérieur de la cuve illustrée sur les figures 1, 2 et 5,
- la figure 7 est une vue partielle en perspective de dessous de la pale illustrée sur les figures 1 et 2, montrant les conformations d'entrainement,
- la figure 8 est une vue en élévation de la pale illustrée sur les figures 1, 2 et 7,
- la figure 9 est une vue de dessus de la pale illustrée sur les figures 1, 2, 7 et 8,
- la figure 10 illustre la pale représentée sur les figures 1, 2, 7, 8 et 9 agencée dans la cuve illustrée sur les figures 1, 2, 5 et 6,
- la figure 11 illustre la cuve représentée sur les figures 1, 2, 5 et 10 en position renversée montrant le fond diffuseur inférieur.
- la figure 12 illustre la face inférieure de la platine en aluminium du siège chauffant représenté sur les figures 2, 3 et 4.
- la figure 13 est une vue en élévation et en coupe partielle de la cuve disposée sur le siège chauffant.

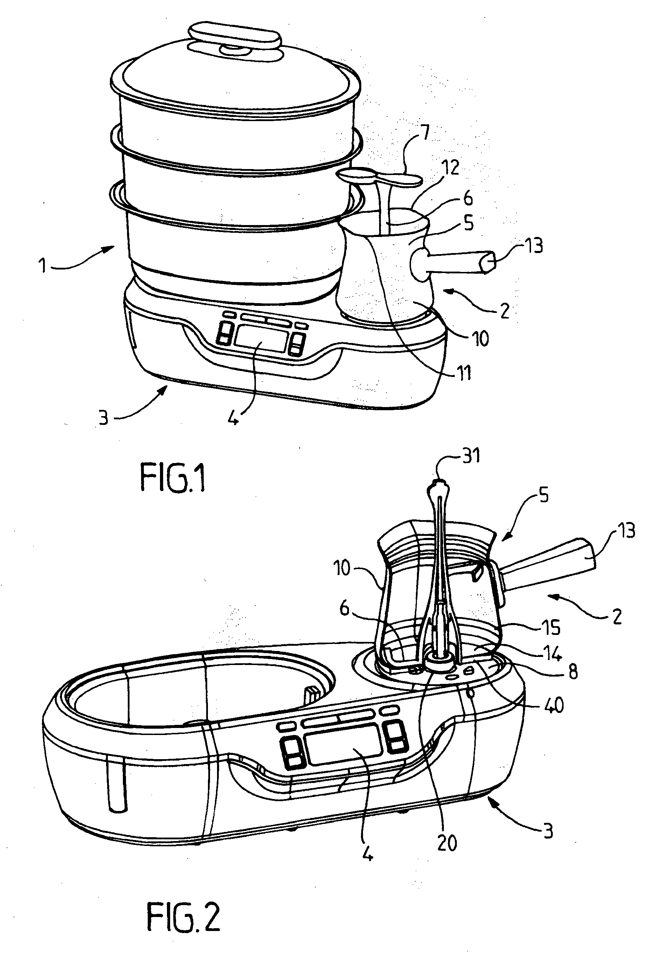

L'appareil électroménager de préparation culinaire chauffant selon l'invention illustré sur la figure 1 comporte à titre d'exemple une partie cuiseur vapeur 1 et une partie saucier 2, avec une embase 3 commune présentant un dispositif de commande 4.

La figure 2 montre plus particulièrement la partie saucier 2 disposée sur l'embase 3. L'appareil électroménager de préparation culinaire chauffant comporte un siège chauffant 20 recevant une cuve 5 métallique amovible. Le siège chauffant 20 est porté par l'embase 3. L'appareil électroménager de préparation culinaire chauffant comporte un premier dispositif de régulation thermique prévu pour détecter la température de la cuve 5 et un deuxième dispositif de régulation thermique monté en bon contact thermique avec le siège chauffant 20, prévu pour contrôler la température du siège chauffant et limiter les chauffes excessives du siège chauffant 20.

Une pale 6 est entrainée en rotation dans la cuve 5. La pale 6 est de préférence guidée en rotation dans la cuve 5. La pale 6 comporte une extrémité supérieure 60 formant un support prévu pour porter une cuiller 7, visible sur la figure 1.

L'embase 3 forme une base motorisée 8 prévue pour entrainer en rotation la pale 6 agencée dans la cuve 5.

La cuve 5 comporte un corps 10 présentant un bec verseur 11 et un autre bec verseur 12 agencé à l'opposé du bec verseur 11. Une poignée 13 est montée sur le corps 10. La poignée 13 est agencée entre le bec verseur 11 et l'autre bec verseur 12. La cuve 5 présente un fond 14 et une paroi latérale 15.

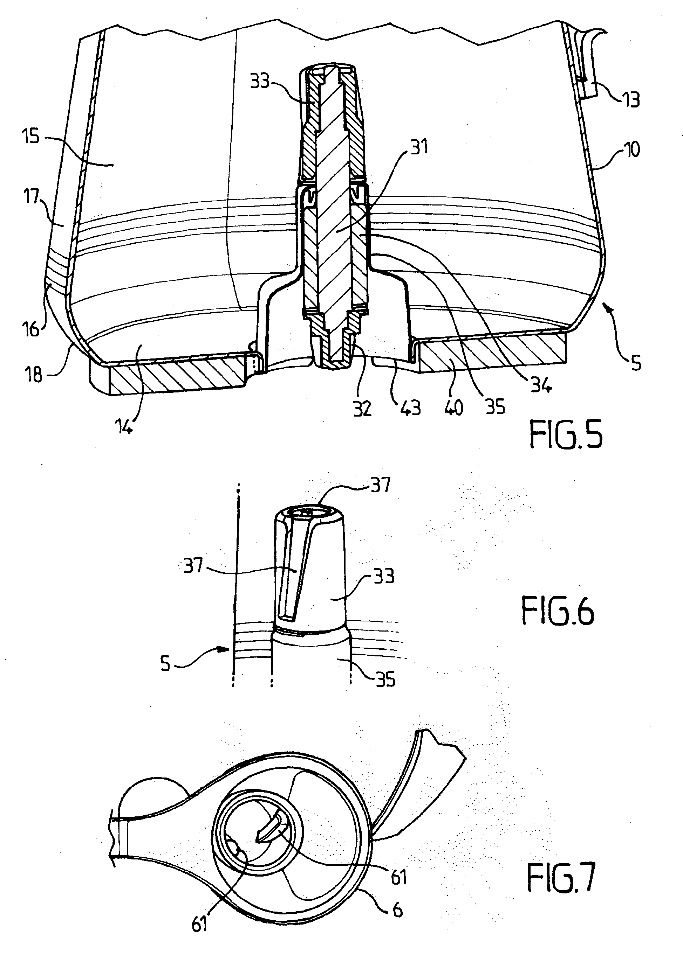

Tel que mieux visible sur la figure 5, la paroi latérale 15 de la cuve 5 présente un renflement annulaire 16. Le renflement annulaire 16 présente avantageusement une partie supérieure 17 inclinée entre 1 et 5° et de préférence entre 2 et 4° vers l'intérieur de la cuve 5 par rapport à l'axe de rotation de la pale 6, et une partie inférieure 18 raccordée avec le fond 14.

La cuve 5 repose sur le siège chauffant 20. Tel que visible sur la figure 2, la cuve 5 comporte un fond diffuseur inférieur 40 reposant sur le siège chauffant 20.

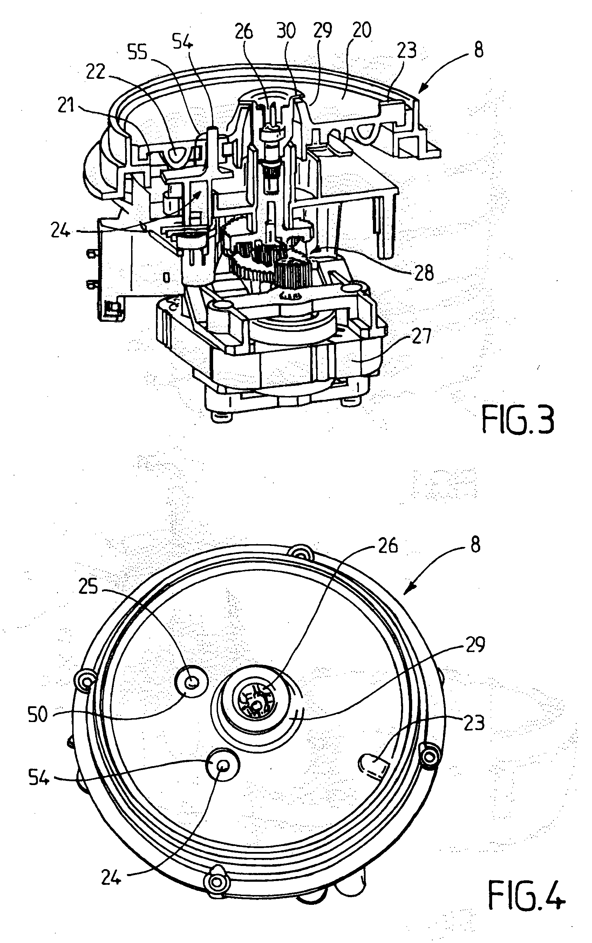

Selon le mode de réalisation préféré illustré sur les figures, le siège chauffant 20 est constitué par une platine en aluminium 21 associée à des moyens de chauffe. Avantageusement les moyens de chauffe comprennent un élément chauffant blindé 22. Tel que mieux visible sur la figure 3, la platine en aluminium 21 est surmoulée sur l'élément chauffant blindé 22. En alternative, l'élément chauffant blindé 22 pourrait notamment être brasé sous la platine en aluminium 21.

L'embase 3 comporte un organe de détection de présence 24 de la cuve 5. L'organe de détection de présence 24 comprend une tige mobile 54 actionnant un micro-switch (non représenté sur les figures). Tel que visible sur la figure 3, la tige mobile 54 est montée à travers le siège chauffant 20 dans un joint 55 afin d'assurer une étanchéité en cas de débordement. La cuve 5 en place sur le siège chauffant 20 repousse la tige mobile 54 et actionne l'organe de détection de présence 24.

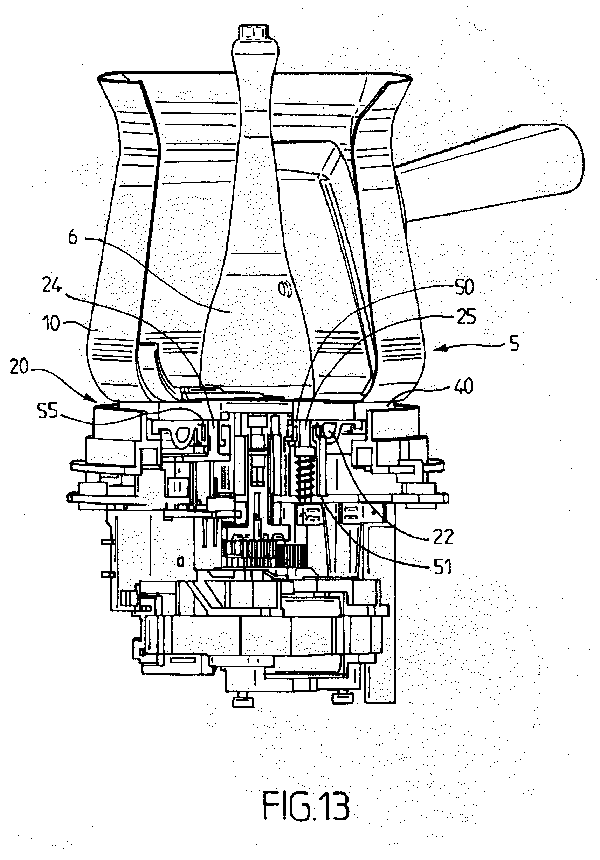

Le premier dispositif de régulation thermique comporte un capteur de température 25 monté mobile contre un moyen de rappel élastique 51 dans une ouverture 52 traversant le siège chauffant 20. Le capteur de température 25 est monté à travers le siège chauffant 20 dans un joint 50 afin d'assurer une étanchéité en cas de débordement et une isolation thermique. Le joint 50 est par exemple formé par une gaine en silicone. Le moyen de rappel élastique 51 est formé par exemple par un ressort hélicoïdal, tel que visible sur la figure 13. Le capteur de température 25 vient en contact avec la cuve 5 disposée sur le siège chauffant 20. Le capteur de température 25 permet de capter directement la température de la cuve 5. Le capteur de température 25 est par exemple formé par une résistance CTN.

Plus particulièrement selon l'invention, le capteur de température 25 est agencé dans une zone froide du siège chauffant 20 et vient en contact avec le fond diffuseur inférieur 40 de la cuve 5 disposée sur le siège chauffant 20.

La base motorisée 8 comporte un axe d'entrainement 26 entrainé par un moteur 27 si désiré par l'intermédiaire d'un réducteur 28, représenté schématiquement sur la figure 3. L'axe d'entrainement 26 traverse le siège chauffant 20. L'axe d'entrainement 26 surplombe le siège chauffant 20. Le siège chauffant 20 présente une cheminée 29 dans laquelle est agencé l'axe d'entrainement 26. L'axe d'entrainement 26 présente une colerette 30 s'étendant au dessus de la cheminée 29.

Le siège chauffant 20 présente des moyens de positionnement de la cuve 5. Les moyens de positionnement comprennent avantageusement la collerette 30 de l'axe d'entrainement 26 et la cheminée 29, ainsi qu'une protubérance 23 formée sur le siège chauffant 20. La collerette 30, la cheminée 29 et la protubérance 23 sont prévues pour être engagées dans une conformation centrale du fond de la cuve 5. La protubérance 23 est prévue pour être engagée dans une conformation latérale de la cuve 5.

Le dispositif de commande 4 comporte avantageusement plusieurs programmes de fonctionnement contrôlant l'alimentation du moteur 27 prévu pour entraîner la pale 6 ainsi que l'alimentation des moyens de chauffe formés par l'élément chauffant blindé 22. Si désiré les programmes peuvent comporter une durée de fonctionnement ajustable. Si désiré les programmes peuvent comporter une phase de mélange à température ambiante, suivie d'un chauffage, par exemple pour réaliser une sauce hollandaise. Si désiré les programmes peuvent comporter une phase de maintien au chaud.

La vitesse de rotation de la pale 6 est avantageusement comprise entre 60 et 100 tours/min. Si désiré, la rotation de la pale 6 peut être séquentielle, notamment pour éviter de trop refroidir les sauces portées à ébullition durant leur réalisation, telles que par exemple les sauces au vin.

Le dispositif de commande 4 comporte avantageusement une régulation de température utilisant le capteur de température 25. La température de consigne peut notamment être choisie entre 65 et 100°C pour obtenir une température maximale dans la sauce comprise entre 80°C et 100°C.

Le corps 10 de la cuve 5 est avantageusement réalisé en acier inoxydable. Le corps 10 de la cuve 5 est solidaire d'un fond diffuseur inférieur 40 avantageusement réalisé en aluminium. Le fond diffuseur inférieur 40 est fixé sous le corps 10. Le fond diffuseur inférieur 40 peut par exemple être assemblé avec le corps 10 par frappe à chaud ou encore par brasage.

Dans le mode de réalisation représenté sur les figures, la pale 6 est entrainée par l'intermédiaire de la cuve 5.

Tel que mieux visible sur la figure 5, la cuve 5 porte un axe entraîneur 31 présentant un organe d'entraînement inférieur 32 prévu pour être entrainé en rotation par la base motorisée 8 et un organe d'entrainement supérieur 33 prévu pour entrainer en rotation la pale 6. L'axe entraîneur 31 est monté dans un palier 34 logé dans une partie tubulaire 35 montée dans une ouverture du fond 14. Un joint d'étanchéité est monté sur le palier 34 autour de l'axe entraineur 31. Le fond diffuseur inférieur 40 présente une forme annulaire ménageant un passage central 43 laissant accessible l'organe d'entraînement inférieur 32.

Tel que que mieux visible sur la figure 6, l'organe d'entraînement supérieur 33 présente des conformations hélicoïdales 37. Tel que montré sur la figure 7, la pale 6 présente des conformations hélicoïdales associées 61 prévues pour venir en prise avec les conformations hélicoïdales 37 de l'organe d'entrainement supérieur 33 lorsque la pale 6 est mise en place dans la cuve 5. L'orientation des conformations hélicoïdales 37 et des conformations hélicoïdales associées 61 est choisie par rapport au sens de rotation de la pale 6 dans la cuve 5 pour plaquer la pale 6 par rapport au fond 14 de la cuve 5. L'organe d'entrainement supérieur 33 entraîné en rotation maintient ainsi la pale 6 axialement en butée pour éviter le soulèvement de la pale 6 lors du fonctionnement de l'appareil, tout en autorisant une mise en place et un retrait aisé de la pale 6.

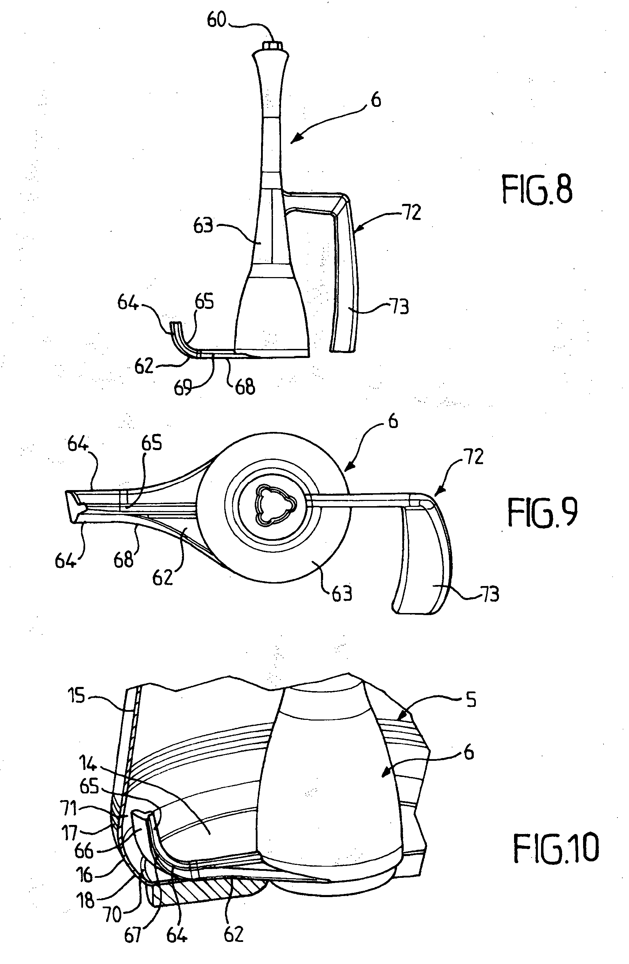

Tel que que mieux visible sur la figure 8, la pale 6 présente un bras inférieur 62 s'étendant à partir de la partie inférieure d'un moyeu 63. Le bras inférieur 62 comporte une extrémité relevée 64.

Tel que mieux visible sur la figure 9, le bras inférieur 62 présente une nervure supérieure de rigidification 65. Plus particulièrement, la nervure supérieure de rigidification 65 est issue du moyeu 63 et s'étend jusqu'à l'extrémité relevée 64 du bras inférieur 62. La nervure supérieure de rigidification 65 atteint la partie terminale de l'extrémité relevée 64 du bras inférieur 62.

Tel que visible sur les figures 2 et 10, le bras inférieur 62 s'étend au dessus du fond 14 de la cuve 5. L'extrémité relevée 64 du bras inférieur 62 ménage un passage périphérique 70 avec la paroi latérale 15 de la cuve 5. Le passage périphérique 70 présente une restriction supérieure 71. L'extrémité relevée 64 du bras inférieur 62 s'élève au dessus de la section maximale du renflement annulaire 16 de la paroi latérale 15 de la cuve 5.

L'extrémité relevée 64 du bras inférieur 62 présente une face extérieure 66 se rapprochant de la paroi latérale 15 de la cuve 5 à partir d'un bord latéral d'attaque 67.

La distance minimale entre la face extérieure 66 de l'extrémité relevée 64 du bras inférieur 62 et la paroi latérale 15 de la cuve 5 est avantageusement comprise entre 0,5 et 2 mm. Dans l'exemple de réalisation illustré sur les figures, la distance minimale entre la face extérieure 66 et la paroi latérale 15 est de l'ordre de 1 mm.

La distance maximale entre le bras inférieur 62 et la cuve 5 au niveau du passage périphérique 70 est avantageusement comprise entre 2 mm et 1 cm. Dans l'exemple de réalisation illustré sur les figures, la distance maximale entre le bras inférieur 62 et la cuve 5 au niveau du passage périphérique 70 est de l'ordre de 5 mm.

La distance minimale entre le bras inférieur 62 et le fond 14 de la cuve 5 est avantageusement plus réduite que la distance maximale entre le bras inférieur 62 et la paroi latérale 15 de la cuve 5 au niveau du passage périphérique 70. Avantageusement, le bras inférieur 62 ménage au moins un passage inférieur avec le fond 14 de la cuve 5. La distance minimale entre le bras inférieur 62 et le fond 14 de la cuve 5 est avantageusement comprise entre 0,5 et 2 mm. Dans l'exemple de réalisation illustré sur les figures, la distance minimale entre le bras inférieur 62 et le fond 14 de la cuve 5 est de l'ordre de 1 mm.

De plus le bras inférieur 62 présente une face inférieure 68 se rapprochant du fond 14 de la cuve 5 à partir d'un bord inférieur d'attaque 69. La face inférieure 68 est prolongée par la face extérieure 66 et le bord inférieur d'attaque 69 est prolongé par le bord latéral d'attaque 67.

La pale 6 comporte un bras supérieur 72 s'étendant à partir de la partie médiane du moyeu 63. Le bras supérieur 72 présente une extrémité plongeante 73 inclinée vers l'arrière par rapport au sens de rotation de la pale 6 dans la cuve 5. Le bras supérieur 72 plonge dans la cuve 5 et s'étend à distance de la paroi latérale 15 de la cuve 5. Le bras supérieur 72 est rattaché horizontalement sur le moyeu 63 de la pâle 6 pour dégager cette zone et ainsi éviter des formations de blocs dans le cas de la sauce au chocolat.

La pale 6 est de préférence réalisée en matériau rigide. La pale 6 est avantageusement réalisée en matière plastique rigide, telle que notamment en PBT.

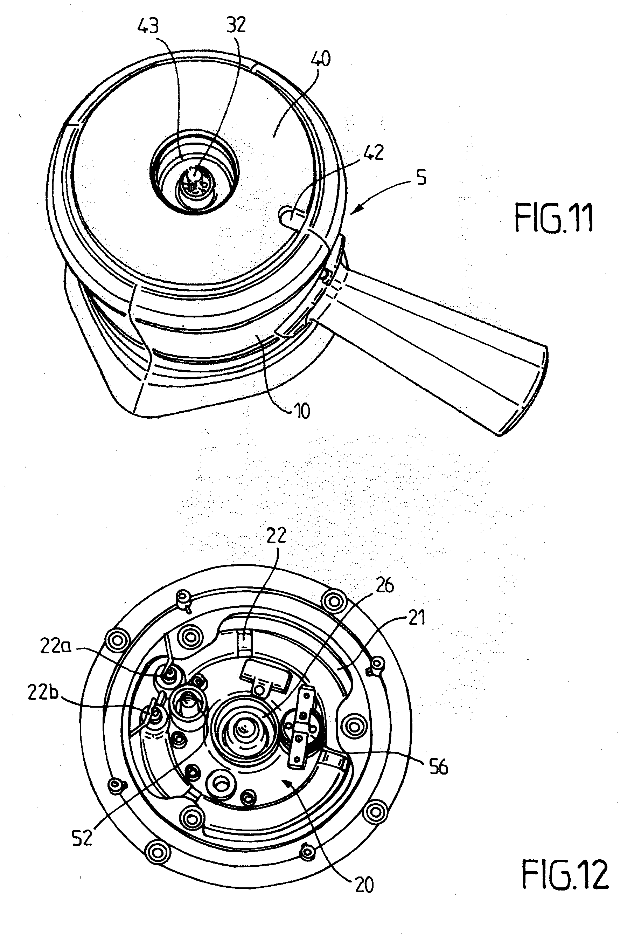

La figure 11 montre la face inférieure de la cuve 5. Le passage central 43 est prévu pour loger la collerette 30 et la cheminée 29 lorsque la cuve 5 est en place sur le siège chauffant 20. Par ailleurs, une conformation concave 42 ménagée dans le fond diffuseur inférieur 40 est prévue pour loger la protubérance 23 lorsque la cuve 5 repose sur le siège chauffant 20. La conformation concave 42 est avantageusement positionnée en bordure latérale du fond diffuseur inférieur 40, pour favoriser une répartition homogène de température dans le fond diffuseur inférieur 40.

La figure 12 montre la face inférieure du siège chauffant 20. L'élément chauffant blindé 22 forme un anneau ouvert. Plus particulièrement, l'élément chauffant blindé 22 comporte deux extrémités 22a, 22b rapprochées. L'élément chauffant blindé 22 entoure au moins partiellement l'axe entraîneur 26.

L'ouverture 52 prévue pour le passage du capteur de température 25 (non représenté sur la figure 12) est agencée à proximité des extrémités 22a, 22b de l'élément chauffant blindé 22. Ainsi le capteur de température 25 est agencé dans une zone froide du siège chauffant 20. Plus particulièrement, l'ouverture 52 est agencée entre les extrémités 22a, 22b de l'élément chauffant blindé 22 et le centre du siège chauffant 20.

Le deuxième dispositif de régulation thermique monté en bon contact thermique avec le siège chauffant 20 est avantageusement formé par un thermostat 56. Le thermostat 56 est agencé entre l'élément chauffant blindé 22 et le centre du siège chauffant 20. En alternative le deuxième dispositif de régulation thermique pourrait notamment comprendre un autre capteur de température disposé de préférence à proximité des moyens de chauffe, pour réduire l'amplitude de température du siège chauffant 20 entre les coupures des moyens de chauffe et leur réalimentation.

La figure 13 montre la cuve 5 en place sur le siège chauffant 20. Le fond diffuseur inférieur 40 repose sur le siège chauffant 20 et repousse le capteur de température 25 contre le moyen de rappel élastique 51.

L'appareil électrique de cuisson selon l'invention fonctionne et s'utilise de la manière suivante.

L'utilisateur choisit un programme de fonctionnement proposé par le dispositif de commande et ajoute les ingrédients dans la cuve 5 disposée sur la base motorisée 8. Les recettes usuelles de sauces comportent des ingrédients liquides ou pateux tels que le lait, la crème, l'huile, les oeufs, le vin, le jus de citron, la vanille liquide, ainsi que des ingrédients plus consistants à broyer, dissoudre ou à disperser tels que les échalottes, le chocolat, le bouillon en cube, le sel, le sucre, l'amidon, la farine, le poivre moulu, le cacao.

De plus, Le bras inférieur 62 permet de remuer la zone inférieure de la cuve 5. La face inférieure 68 biseautée du bras inférieur 62 et la face extérieure 66 biseautée de l'extrémité relevée 64 permettent d'écraser les ingrédients entre le bras inférieur 62 et la cuve 5. Le passage périphérique 70 permet de réduire la taille des particules d'aliments les plus importantes alors que les morceaux plus petits sont écrasés entre le fond 14 de la cuve 5 et le bras inférieur 62 au niveau du passage inférieur. Le bras supérieur 72 en forme de spatule permet de créer un tourbillon pour mélanger les ingrédients restés en suspension. Les ingrédients disposés dans la cuve 5 sont ainsi progressivement homogénéisés.

Le deuxième dispositif de régulation thermique permet d'éviter les élévations de température excessives du siège chauffant 20. Le fond diffuseur inférieur 40 permet d'obtenir une température bien homogène dans la cuve 20 en évitant les points chauds. Le premier dispositif de régulation thermique influencé principalement par la température du fond diffuseur inférieur 40 favorise l'obtention d'un pilotage en température précis.

Les profils de température précis souhaités pour la réalisation de sauces peuvent ainsi être plus facilement approchés.

A titre de variante, le siège chauffant 20 peut comporter plusieurs moyens de chauffe.

A titre de variante, le fond diffuseur inférieur 40 peut présenter au moins une conformation concave 42 prévue pour loger une protubérance 23 formée sur le siège chauffant 20.

A titre de variante, la pale 6 n'est pas nécessairement entrainée par l'intermédiaire de la cuve 5. L'organe d'entraînement supérieur 33 présentant des conformations hélicoïdales 37 pourrait notamment appartenir à la base motorisée 8.

Si désiré la pale 6 peut comporter plusieurs bras inférieurs 62. Si désiré la pale 6 peut comporter plusieurs bras supérieurs 72, ou être dépourvue de bras supérieur.

A titre de variante, la pale 6 n'est pas nécessairement entrainée par la base du moyeu 63. La pale 6 pourrait notamment être entrainée en rotation par l'extrémité supérieure 60 du moyeu 63.

A titre de variante, l'embase 3 ne forme pas nécessairement une base motorisée 8.

La présente invention n'est nullement limitée à l'exemple de réalisation décrit et à ses variantes, mais englobe de nombreuses modifications dans le cadre des revendications.

## Revendications

1. Appareil électroménager de préparation culinaire chauffant comportant un siège chauffant (20) recevant une cuve (5) métallique amovible, un premier dispositif de régulation thermique comportant un capteur de température (25) monté mobile contre un moyen de rappel élastique (51) dans une ouverture (52) traversant le siège chauffant (20), ledit capteur de température (25) venant en contact avec la cuve (5), un deuxième dispositif de régulation thermique (56) monté en bon contact thermique avec le siège chauffant (20), **caractérisé en ce que** la cuve (5) comporte un fond diffuseur inférieur (40) reposant sur le siège chauffant (20), **en ce que** le capteur de température (25) est agencé dans une zone froide du siège chauffant (20), et **en ce que** le capteur de température (25) vient en contact avec le fond diffuseur inférieur (40) de la cuve (5).

2. Appareil électroménager de préparation culinaire chauffant selon la revendication 1, **caractérisé en ce que** la cuve (5) comporte un corps (10) réalisé en acier inoxydable, sous lequel est fixé le fond diffuseur inférieur (40).

3. Appareil électroménager de préparation culinaire chauffant selon l'une des revendications 1 ou 2, **caractérisé en ce que** la paroi latérale de la cuve (5) présente un renflement annulaire (16).

4. Appareil électroménager de préparation culinaire chauffant selon l'une des revendications 1 à 3, **caractérisé en ce que** le siège chauffant (20) est constitué par une platine en aluminium (21) associée à des moyens de chauffe.

5. Appareil électroménager de préparation culinaire chauffant selon la revendication 4, **caractérisé en ce que** la platine en aluminium (21) est surmoulée sur un élément chauffant blindé (22).

6. Appareil électroménager de préparation culinaire chauffant selon selon la revendication 5, **caractérisé en ce que** l'ouverture (52) est agencée à proximité des extrémités de l'élément chauffant blindé (22).

7. Appareil électroménager de préparation culinaire chauffant selon l'une des revendications 5 ou 6, **caractérisé en ce que** l'élément chauffant blindé (22) forme un anneau ouvert.

8. Appareil électroménager de préparation culinaire chauffant selon la revendication 7, **caractérisé en ce que** l'ouverture (52) est agencée entre les extrémités de l'élément chauffant blindé (22) et le centre du siège chauffant (20).

9. Appareil électroménager de préparation culinaire chauffant selon l'une des revendications 1 à 8, **caractérisé en ce que** la cuve (5) repose sur une base motorisée (8) prévue pour entrainer en rotation une pale (6) agencée dans la cuve (5).

10. Appareil électroménager de préparation culinaire chauffant selon la revendication 9, **caractérisé en ce qu'**un axe d'entrainement (26) traverse le siège chauffant (20) et **en ce que** le fond diffuseur inférieur (40) présente une forme annulaire ménageant un passage central (43).

11. Appareil électroménager de préparation culinaire chauffant selon l'une des revendications 9 ou 10, **caractérisé en ce que** la cuve (5) porte un axe entraîneur (31) présentant un organe d'entraînement inférieur (32) prévu pour être entrainé en rotation par la base motorisée (8) et un organe d'entrainement supérieur (33) prévu pour entrainer en rotation la pale (6).

12. Appareil électroménager de préparation culinaire chauffant selon l'une des revendications 1 à 11, **caractérisé en ce que** le fond diffuseur inférieur (40) est réalisé en aluminium.

13. Appareil électroménager de préparation culinaire chauffant selon l'une des revendications 1 à 12, **caractérisé en ce que** le fond diffuseur inférieur (40) présente au moins une conformation concave (42) prévue pour loger une protubérance (23) formée sur le siège chauffant (20).

14. Appareil électroménager de préparation culinaire chauffant selon la revendication 13, **caractérisé en ce que** la conformation concave (42) est positionnée en bordure latérale du fond diffuseur inférieur (40).

## Patentansprüche

1. Elektrohaushaltsgerät mit Aufheizfunktion für kulinarische Zubereitungen, das eine Heizplatte (20) umfasst, auf der ein abnehmbarer Behälter (5) aus Metall und eine erste Vorrichtung zur Wärmeregulierung mit einem Temperaturfühler (25), der beweglich an einem elastischen Rückstellmittel (51) in einer Öffnung (52) gelagert ist, die die Heizplatte (20) durchdringt, wobei der genannte Temperaturfühler (25) mit dem Behälter (5) in Kontakt ist, sowie eine zweite Vorrichtung zur Wärmeregulierung (56) aufgesetzt werden, wobei letztere derart montiert ist, dass sie in gutem Wärmekontakt mit der Heizplatte (20) steht, **dadurch gekennzeichnet, dass** der Behälter (5) einen unteren Diffusionsboden (40) umfasst, der auf der Heizplatte (20) aufliegt, und **dadurch gekennzeichnet, dass** der Temperaturfühler (25) in einem kalten Bereich der Heizplatte (20) angeordnet ist und dass der Temperaturfühler (25) in Kontakt mit dem unteren Diffusionsboden (40) des Behälters (5) steht.

2. Elektrohaushaltsgerät mit Aufheizfunktion für kulinarische Zubereitungen nach Anspruch 1, **dadurch gekennzeichnet, dass** der Behälter (5) ein Gehäuse (10) umfasst, das aus Edelstahl hergestellt und unter dem der untere Diffusionsboden befestigt (40) ist.

3. Elektrohaushaltsgerät mit Aufheizfunktion für kulinarische Zubereitungen nach einem der Ansprüche 1 oder 2, **dadurch gekennzeichnet, dass** die Seitenwand des Behälters (5) eine ringförmig verlaufende Ausbuchtung (16) aufweist.

4. Elektrohaushaltsgerät mit Aufheizfunktion für kulinarische Zubereitungen nach einem der Ansprüche 1 bis 3, **dadurch gekennzeichnet, dass** die Heizplatte (20) aus einer Aluminiumplatte (21) besteht, die an Heizvorrichtungen angeschlossen ist.

5. Elektrohaushaltsgerät mit Aufheizfunktion für kulinarische Zubereitungen nach Anspruch 4, **dadurch gekennzeichnet, dass** die Aluminiumplatte (21) auf einem gekapselten Heizelement (22) aufgeformt ist.

6. Elektrohaushaltsgerät mit Aufheizfunktion für kulinarische Zubereitungen nach Anspruch 5, **dadurch gekennzeichnet, dass** die Öffnung (52) in der Nähe der Enden des gekapselten Heizelements (22) angeordnet ist.

7. Elektrohaushaltsgerät mit Aufheizfunktion für kulinarische Zubereitungen nach einem der Ansprüche 5 oder 6, **dadurch gekennzeichnet, dass** das gekapselte Heizelement (22) einen offenen Ring bildet.

8. Elektrohaushaltsgerät mit Aufheizfunktion für kulinarische Zubereitungen nach Anspruch 7, **dadurch gekennzeichnet, dass** die Öffnung (52) zwischen den Enden des gekapselten Heizelements (22) und der Mitte der Heizplatte (20) angeordnet ist.

9. Elektrohaushaltsgerät mit Aufheizfunktion für kulinarische Zubereitungen nach den Ansprüchen 1 bis 8, **dadurch gekennzeichnet, dass** der Behälter (5) auf einer motorisierten Basis (8) ruht, durch die ein Drehelement (6) in Drehung versetzt wird, der innerhalb des Behälters (5) angeordnet ist.

10. Elektrohaushaltsgerät mit Aufheizfunktion für kulinarische Zubereitungen nach Anspruch 9, **dadurch gekennzeichnet, dass** eine Antriebsachse (26) durch die Heizplatte (20) hindurch geführt wird und dass der untere Diffusionsboden (40) ringförmig gestaltet ist und einen zentralen Durchlauf (43) ausbildet.

11. Elektrohaushaltsgerät mit Aufheizfunktion für kulinarische Zubereitungen nach einem der Ansprüche 9 oder 10, **dadurch gekennzeichnet, dass** der Behälter (5) eine Antriebsachse (31), die ein unteres Antriebselement (32) aufweist, das dafür vorgesehen ist, über die motorisierte Basis (8) in Drehbewegung versetzt zu werden, sowie ein oberes Antriebselement (33) trägt, das dafür vorgesehen ist, das Drehelement (6) in Drehung zu versetzen.

12. Elektrohaushaltsgerät mit Aufheizfunktion für kulinarische Zubereitungen nach einem der Ansprüche 1 bis 11, **dadurch gekennzeichnet, dass** der untere Diffusionsboden (40) aus Aluminium hergestellt ist.

13. Elektrohaushaltsgerät mit Aufheizfunktion für kulinarische Zubereitungen nach einem der Ansprüche 1 bis 12, **dadurch gekennzeichnet, dass** der untere Diffusionsboden (40) mindestens eine konkave Ausformung (42) aufweist, die für die Aufnahme eines Vorsprungs (23) vorgesehen ist, der an der Heizplatte (20) ausgebildet ist.

14. Elektrohaushaltsgerät mit Aufheizfunktion für kulinarische Zubereitungen nach Anspruch 13, **dadurch gekennzeichnet, dass** die konkave Ausformung (42) am seitlichen Rand des unteren Diffusionsbodens (40) angeordnet ist.

## Claims

1. Food preparation household electrical heating appliance comprising a heating base (20) receiving a removable metal tank (5), a first temperature regulation device comprising a temperature sensor (25) mounted movably against elastic return means (51) in an opening (52) crossing the heating base (20), said temperature sensor (25) coming into contact with the tank (5), a second temperature regulation device (56) mounted in good thermal contact with the heating base (20), **characterised in that** the tank (5) has a lower diffuser bottom (40) resting on the heating base (20), **in that** the temperature sensor (25) is arranged in a cold zone of the heating base (20), and **in that** the temperature sensor (25) comes into contact with the lower diffuser bottom (40) of the tank (5).

2. Food preparation household electrical heating appliance according to claim 1, **characterised in that** the tank (5) comprises a body (10) made of stainless steel, below which the lower diffuser bottom (40) is fastened.

3. Food preparation household electrical heating appliance according to claim 1 or 2, **characterised in that** the side wall of the tank (5) has an annular bulge (16).

4. Food preparation household electrical heating appliance according to one of claims 1 to 3, **characterised in that** the heating base (20) consists of an aluminium plate (21) associated with heating means.

5. Food preparation household electrical heating appliance according to claim 4, **characterised in that** the aluminium plate (21) is overmoulded on a shielded heating element (22).

6. Food preparation household electrical heating appliance according to claim 5, **characterised in that** the opening (52) is formed near the ends of the shielded heating element (22).

7. Food preparation household electrical heating appliance according to claim 5 or 6, **characterised in that** the shielded heating element (22) forms an open ring.

8. Food preparation household electrical heating appliance according to claim 7, **characterised in that** the opening (52) is formed between the ends of the shielded heating element (22) and the centre of the heating base (20).

9. Food preparation household electrical heating appliance according to one of claims 1 to 8, **characterised in that** the tank (5) rests on a motorised base (8) designed to rotate a blade (6) arranged in the tank (5).

10. Food preparation household electrical heating appliance according to claim 9, **characterised in that** a drive shaft (26) crosses the heating base (20) and **in that** the lower diffuser bottom (40) has an annular shape defining a central passage (43).

11. Food preparation household electrical heating appliance according to claim 9 or 10, **characterised in that** the tank (5) bears a drive shaft (31) having a lower drive member (32) designed to be rotated by the motorised base (8) and an upper drive member (33) designed to rotate the blade (6).

12. Food preparation household electrical heating appliance according to one of claims 1 to 11, **characterised in that** the lower diffuser bottom (40) is made of aluminium.

13. Food preparation household electrical heating appliance according to one of claims 1 to 12, **characterised in that** the lower diffuser bottom (40) has at least one concave conformation (42) designed to accommodate a projection (23) formed on the heating base (20).

14. Food preparation household electrical heating appliance according to claim 13, **characterised in that** the concave conformation (42) is positioned on the side edge of the lower diffuser bottom (40).
